# EUROPEAN PATENT SPECIFICATION

(11) **EP 3 555 742 B1**
(45) Date of publication and mention of the grant of the patent: **19.07.2023**
(21) Application number: 17881366.3
(22) Date of filing: 15.12.2017
(51) Int. Cl.: G06F 9/30

(54) **FLOATING POINT INSTRUCTION FORMAT WITH EMBEDDED ROUNDING RULE**
GLEITKOMMAANWEISUNGSFORMAT MIT EINGEBETTETER RUNDUNG
FORMAT D'INSTRUCTION À VIRGULE FLOTTANTE AVEC RÈGLE D'ARRONDI INCORPORÉE

(30) Priority: 15.12.2016 US 201662434521 P; 14.12.2017 US 201715841959
(43) Date of publication of application: 23.10.2019
(73) Proprietor: Optimum Semiconductor Technologies Inc., Tarrytown, NY 10591 (US)
(72) Inventor: MOUDGILL, Mayan, Chapaqua, NY 10514 (US); HURTLEY, Paul, White Plains, NY 10605 (US); SENTHILVELAN, Murugappan, Collegeville, PA 19426 (US); BALZOLA, Pablo, Madrid 28033 (ES); RAMADURAI, Vaidyanathan Thevangudi, Irvington, New York 10533 (US)
(74) Representative: MERH-IP Matias Erny Reichl Hoffmann Patentanwälte PartG mbB
(86) International application number: PCT/US2017/066677
(87) International publication number: WO 2018/112345

(56) References cited:
- WO-A1-97/14094
- WO-A1-98/25201
- WO-A1-2008/036944
- WO-A1-2015/147895
- US-A- 5 511 016
- US-A- 5 892 697
- US-A1- 2003 055 860
- US-A1- 2008 089 448
- US-A1- 2009 172 355
- US-A1- 2010 241 834
- US-A1- 2011 004 644
- US-A1- 2011 029 760
- US-A1- 2011 093 682
- US-A1- 2012 079 251
- US-A1- 2012 324 136
- US-A1- 2013 151 576
- US-A1- 2013 151 576
- US-A1- 2013 290 685
- US-A1- 2014 095 891
- US-A1- 2014 195 580
- US-A1- 2016 103 787
- US-B1- 6 253 311

## Description

### RELATED APPLICATIONS

The present application claims priority to U.S. Provisional Application No. 62/434,521 filed on December 15, 2016.

### TECHNICAL FIELD

The present disclosure relates to a processor and, more specifically, to an instruction set architecture (ISA) associated with the processor, where each of the floating point instructions of the ISA specifies the rounding rule specifically applicable to that floating point instruction.

### BACKGROUND

Processors (e.g., central processing units (CPUs)) may execute software applications including system software (e.g., the operating system) and user software applications. The microarchitecture of a processor may be designed according to an instruction set architecture (ISA). The ISA specifies a set of instructions. A software program can be compiled into a collection of these instructions that can be executed on an execution pipeline of the processor. The instructions specified in the ISA may include instructions processing floating point values (e.g., as inputs or as outputs). These instructions are referred to as floating point instructions of the ISA. WO2015/147895A1 discloses a processor having a decode unit to decode a three-source floating point addition instruction indicating a first source operand having a first floating point data element, a second source operand having a second floating point data element, and a third source operand having a third floating point data element. An execution unit is coupled with the decode unit. and stores a result in a destination operand indicated by the instruction. The result includes a result floating point data element that includes a first floating point rounded sum representing an additive combination of a second floating point rounded sum and the third floating point data element. The second floating point rounded sum represents an additive combination of the first floating point data element and the second floating point data element.

### BRIEF DESCRIPTION OF THE DRAWINGS

The disclosure will be understood more fully from the detailed description given below and from the accompanying drawings of various embodiments of the disclosure. The drawings, however, should not be taken to limit the disclosure to the specific embodiments, but are for explanation and understanding only. The invention is defined by the annexed claims. References in this description to other embodiments which do not fall under the scope of the claims are to be considered as alternative examples.
**FIG. 1** illustrates a system including a processor 102.
**FIG. 2** illustrates a floating point instruction that may include a field to store an identifier of a rounding rule.
**FIG. 3** illustrates the floating point conversion instructions .

### DETAILED DESCRIPTION

In a computer, floating point values may be represented using a number of bits that can be interpreted as a representation of a real number. One common representation is the binary32 format as defined according to the IEEE 754 technical standard. The 32 bits of the binary32. format may include a sign bit (S), 8 exponent bits, and 23 fraction bits.

a 32-bit word encoded in this format can be converted into a real number using the following pseudo code as shown in Table 1:

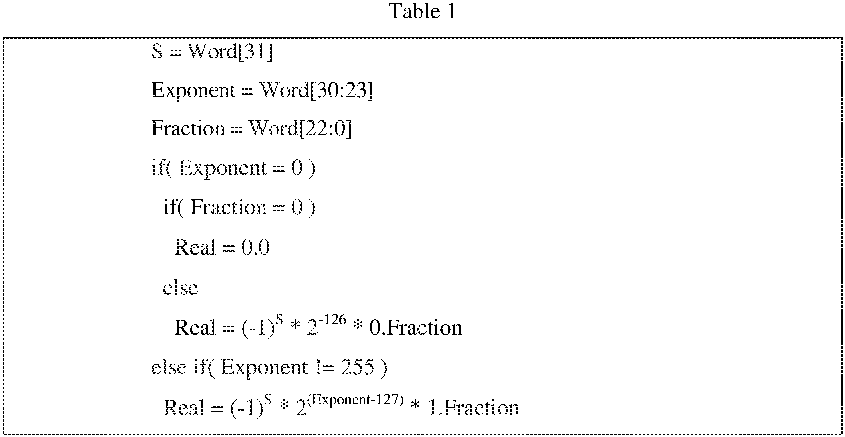

In this example, the sign bit S is used to determine whether the real number is a positive (+) number or a negative (-) number, where the exponent value 255 (i.e. all 1s) is used to represent +/-- Infinity and other exceptional conditions. A representation that uses a finite number of bits can only represent a finite number of real values; in particular, there are some real numbers that cannot be represented using the representation. For example, the IEEE binary32 format can represent at most 2³² real values. This means that certain real numbers cannot be represented.

Consider the decimal numbers 33554432 (in hexadecimal, 0x200_0000) and the number 1. Both of these two numbers can be exactly represented, in the binary32 format, as S=0, Exponent=152, Fraction=0 and S=0, Exponent=127, Fraction=0 respectively. Their sum 33554433 (0x200_0001), however, cannot be represented in this format because the representation of the sum requires a 25-bit fraction which exceeds the number of bits assigned to the fraction portion of the binary32 format.

When a real value cannot be exactly represented in a particular floating point format, a rounding operation may occur. In some implementations, the rounding operation is to choose an alternative real number that can be represented in that format (e.g., the binary32 format). Typically, the chosen alternative real number can be either the next largest representable real number or the next smallest representable real number.

When performing floating point operations such as addition, subtraction, multiplication, and/or division, frequently the exact result of these operations cannot be represented in the floating point format. In this situation, a processor may need to execute a rounding operation to determine an alternative number that can be represented. The processor may choose a particular rounding method based on the rounding rules. Some of the rounding rules that can be used are:
- Round to the nearest: round to the nearest value; if the number falls midway it is rounded to the nearest value with an even (zero) least significant bit.
- Round toward 0: round towards zero (also known as truncation).
- Round toward + Infinity: round towards positive infinity (also known as rounding up or ceiling).
- Round toward - Infinity: round towards negative infinity (also known as rounding down or floor).

The application of different rounding rules can produce different rounding results.

The rounding may also occur in a processor when a floating-point number is converted into an integer number. In that case, the processor may convert the real value represented by the floating-point format to the closest integer using a determined rounding rule. The integer results can differ depending on the rounding rule used. For example, consider the following examples as shown in Table 2. Using different rounding rules may produce different results.

**Table 2.**

| Rule/value | +11.5 | +12.5 | -11.5 | -12.5 |
|---|---|---|---|---|
| Nearest | + 12 | +12 | -12 | -12 |
| Towards 0 | +11 | +12 | -11 | -12 |
| Towards +infinity | +12 | +13 | -11 | -12 |
| Towards -infinity | +11 | +12 | -12 | -13 |

Rounding can also arise in the case of integer to floating point conversion. For example, when converting a 32 bit integer represented in an integer format to a binary32 bit format, the integer number 0x200_0001 is not exactly representable, and is rounded, possibly to 0x200_0000 or to 0x200_0004 before conversion.

In some implementations of a processor, the rounding rule is determined in the specification of the processor architecture. In other implementations, the rounding rules that can be used are specified in a register (referred to as a *floating-point control register*) accessible by the processor through a programming interface. In this scenario, when a floating point operation (or a floating point/integer conversion) generates a non-representable result, the processor examines the *floating-point control register* to determine which the rounding rule to apply, and the result is rounded based on that the determined rounding rule.

The choice of the rounding rule being used can affect the overall result of a sequence of floating point operations. Consequently, in specialized applications, picking different rounding rules can result in a higher or lower quality final result. In such applications, the program may select an appropriate rounding rule (or rules). However, commonly, a software application does not specify the rounding rule used in a floating point operations. When the rule is not specified, a default rounding rule is used. The default rounding rule is generally associated with a programming language, and is often the round-to-nearest rule.

The choice of rounding method when converting from a floating-point number to an integer can be explicitly defined as rounding functions in a function library of the programming language. A programmer can then use these rounding functions (e.g., ceiling, round, or floor) in code to explicitly apply the desired rounding rule to a particular number.

In the case where the only way to control the floating point rounding mode is the floating point control register, a library function that explicitly specifies the rounding mode would increase the overhead related to managing the rounding mode. For example, the pseudo-code sequence for the ceiling function is shown in Table 3.

**Table 3**

| |
|---|
| ```
            CEILING:
             read_rm $rl // save old rounding mode
             write_rm ROUND_TO_NEG_INF
             convert $r0,$f0
             write_rm $r1 // restore rounding mode
             return
``` |

where it is noted that of three out of the five lines of instructions in this code sequence are related to manipulating the rounding mode, which causes an increase of the computation overhead.

Frequently switching the rounding mode can be computationally expensive, particularly in the context of modern out-of-order superscalar processors. In some implementations, reading and/or writing the rounding mode can consume a multiple processor cycles. It is often a serializing operation, inhibiting parallel and out-of-order floating point execution.

There are cases that arise where, in a sequence of code, the rounding mode needs to be changed frequently. One example is in a C program where generally, floating point operations are performed with round-to-nearest, while floating-point to integer conversions are specified using round-to-zero. This means a sequence of operations that involves floating point operations that are then rounded to integers would have frequent rounding mode changes. Another scenario that arises is where a user explicitly desires to control the floating-point rounding mode being applied to a particular region of the code. To properly support this functionality, the floating-point rounding mode register needs to be reset to the default mode for the language every time control leaves that region of code. This turns out to be quite expensive as well.

Embodiments of the present disclosure provide for an instruction set architecture including instructions that specify the rounding rule to be applied to a floating-point instruction that may require rounding. In one embodiment, the instruction can directly specify a rounding rule as an attribute of the instruction. If a particular rounding mode is required by a language, the rounding rule can be explicitly encoded using an immediate value in the instruction, thus avoiding the need to manage a floating-point register. In another embodiment, the instruction may specify that the identifier representing a rounding-rule for the instruction be read from a floating-point control register. This supports the case where the user wishes to exert control over the rounding rule used, and dynamically change the rounding rule in an application program.. Thus, embodiments of the present disclosure provide means for a floating point instruction, including floating point conversion instructions, of an ISA to exactly specify the desired rounding-mode, or to specify that a default rounding mode provided by a floating-point control register be used.

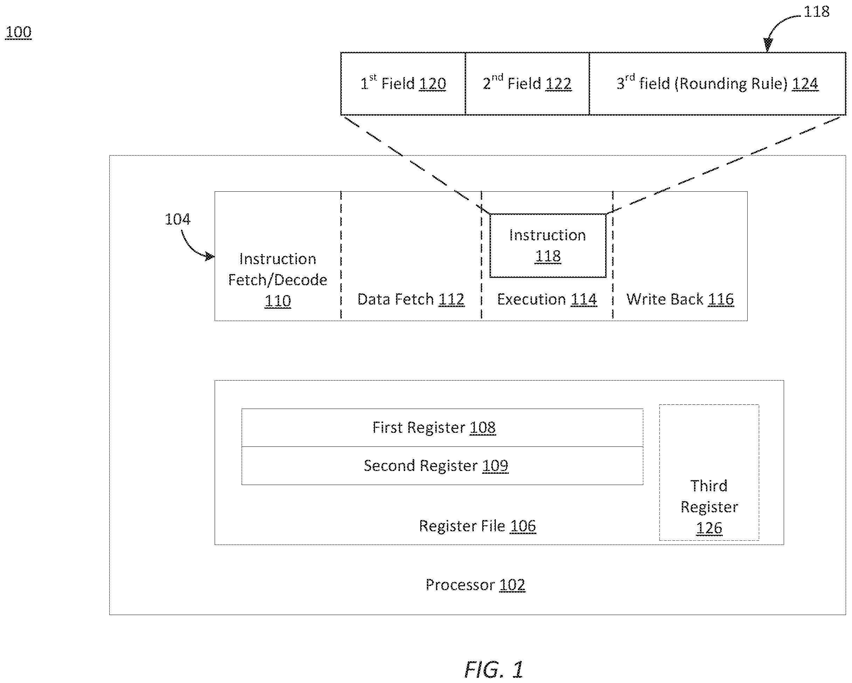

**FIG. 1** illustrates a system-on-a-chip (SoC) 100 including a processor 102 according to an embodiment of the present disclosure. Processor 102 may include logic circuitry fabricated on a semiconductor chipset such as SoC 100. Processor 100 can be a central processing unit (CPU), a graphics processing unit (GPU), or a processing core of a multi-core processor. As shown in **FIG. 1****,** processor 102 may include an instruction execution pipeline 104 and a register file 106. Pipeline 104 may include multiple pipeline stages, and each stage includes logic circuitry fabricated to perform operations of a specific stage in a multi-stage process needed to fully execute an instruction specified in an instruction set architecture (ISA) of processor 102. In one embodiment, pipeline 104 may include an instruction fetch/decode stage 110, a data fetch stage 112, an execution stage 114, and a write back stage 116.

Processor 102 may include a register file 106 which may further include registers 108, 109 associated with processor 102. In one embodiment, register file 106 may include general purpose registers 108, 109 that each may include a certain number (referred to as the "length") of bits to store data items processed by instructions executed in pipeline 104. For example, depending on implementations, registers 108, 109 can be 64-bit, 128-bit, 256-bit, or 512-bit registers. Each of the registers 108, 109 may store one or more data items. Registers 108, 109 may be implemented to store floating-point data items and/or fixed-point data items, where the floating-point data items may represent real numbers and the fixed-point data items may represent integers.

The source code of a program may be compiled into a series of machine-executable instructions defined in an instruction set architecture (ISA) associated with processor 102. When processor 102 starts to execute the executable instructions, these machine-executable instructions may be placed on pipeline 104 to be executed sequentially. Instruction fetch/decode stage 110 may retrieve an instruction placed on pipeline 104 and identify an identifier associated with the instruction. The instruction identifier may associate the received instruction with a circuit implementation of the instruction 118 specified in the ISA of processor 102.

The instructions specified in the ISA may be designed to process data items stored in general purpose registers (GPRs) 108, 109. Data fetch stage 112 may retrieve data items (e.g., floating-point or fixed-point) to be processed from GPR 108. Execution stage 114 may include logic circuitry to execute instructions specified in the ISA of processor 102.

In one embodiment, the logic circuitry associated with execution stage 114 may include multiple "execution units" (or functional units), each being dedicated to perform one respective instruction. The collection of all instructions performed by these execution units may constitute the instruction set associated with processor 102. After execution of an instruction to process data items retrieved by data fetch stage 112, write back stage 116 may output and store the results in GPRs 108, 109.

In one embodiment, the ISA of processor 102 may define a floating point instruction, and the execution stage 114 of processor 102 may include an execution unit 118 that include hardware implementation of the floating point instruction defined in the ISA. The floating point instruction may include a first field 120 (or operand) to store an identifier of first register 108, a second field 122 (or operand) to store an identifier of second register 109, and a third field 124 (or operand) to store an identifier representing a rounding rule. The instruction, when executed, may include operations to read a first data item (floating-point data item or fixed-point data item), calculate a result value (floating-point data item) based on the first data item stored in the first register, and round the result value using a rounding rule specified in the third field of the instruction to store result in the second register 109. In this way, embodiments of the present disclosure may allow a program to specify a per-instruction rounding rule. The per-instruction rounding rule implementation allows different instructions associated with different rounding rules, rather than employing one rounding rule (e.g., a default rounding rule) for all instructions executed by the processor 102.

In one embodiment, the rounding rule may be identified by an immediate value stored in third field 124. For example, the immediate value can be an integer, and different integer values may correspond to different rounding rules. In an embodiment in accordance with the invention as claimed, the third field 124 stores an identifier of a third register 126 of register file 106, where register 126 stores an identifier corresponding to a specific rounding rule. The indirect specification of the rounding rule (e.g., via register 126) may provide further flexibility to a programmer to program an application.

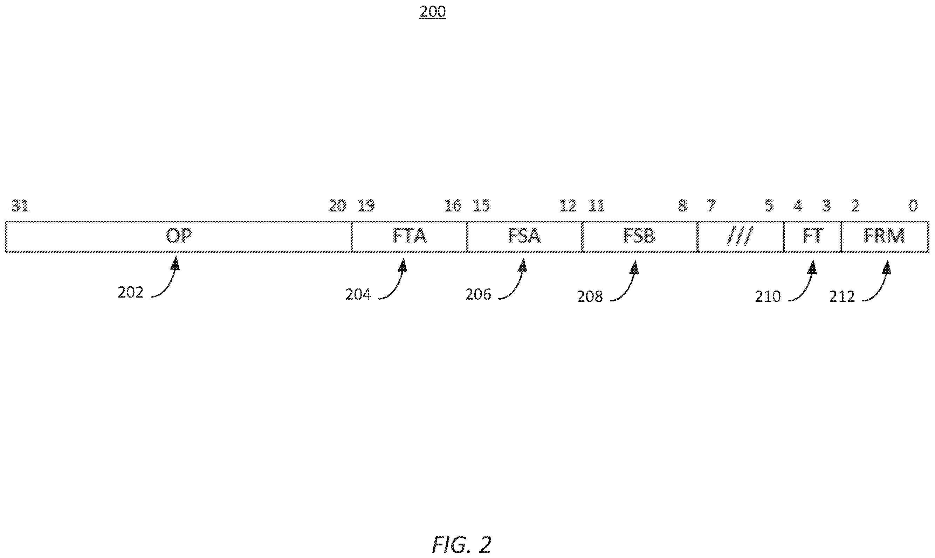

**FIG. 2** illustrates a floating point instruction that may include a field to store an identifier of a rounding rule according to an embodiment of the present disclosure. As shown in **FIG. 2****,** the instruction 200 may be specified in the ISA to include an operation field 202, a target register field 204, a first input register field 206, a second input register field 208, an operation type field 210, and a rounding rule field 212. The operation field 202 may store an identifier for the floating point operation (e.g., *fadd*)*.* The target register field 204 may specify a floating-point register associated with the processor for storing the output. The first input register field 206 and the second input register field 208 may specify the floating-point registers that store the input values (or values to be added together). The operation type field 210 may store a value representing the floating point type (e.g., single precision or double precision). The rounding rule field 212 may store an identifier (FRM) that represents a type of rounding rule.

For example, instruction *fadd_s_rzero $f3,$f1,$f2* in the GPTX architecture specifies a single precision floating point add of the contents of $f1 with $f2, storing the results back in $f3, using the rounding rule round to zero.

The fixed rounding rules encoded in the FRM value can include:
- rnear: round to nearest (e.g., associated with an identifier RNEAR),
- rzero: round to zero (e.g., associated with an identifier RZERO),
- rdown: round down (e.g., associated with an identifier RDOWN),
- nip: round up (e.g., associated with an identifier RUP),

The other encoding available for the FRM identifier is *rdyn* - which specifies that the rounding rule specified in the floating point control register should be used, thus indirectly specifying the rounding rules (rather than using a fixed rule).

During the conversion from an integer to a floating-point number, the processor may store the integer in a general-purpose register and store the result in a floating-point register. During the copy from the general-purpose register to floating-point register, the integer value is converted to the equivalent floating-point representation, with rounding if necessary. The rounding may similarly occur when the processor executes an instruction that copies a floating point value from the floating point register to a general-purpose registers, where the floating point value is converted to an integer value based on the rounding rule specified in the instruction.

In one implementation of an ISA, these instructions are the *fcvtr* (floating converted from integer) and *rcvtf* (integer converting from floating) instructions that the convert an integer stored in a general-purpose register to a floating-point value stored in a floating-point register and a floating-point value in a floating-point register to an integer stored in a general-purpose register, respectively. The FRM field of these instructions may specify the choice of rounding rule to be applied during the conversion.

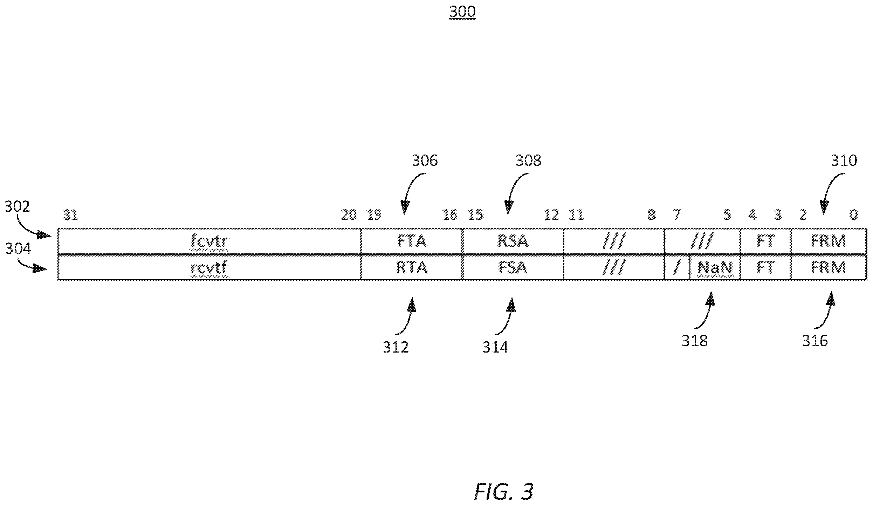

**FIG. 3** illustrates the fcvtr instruction 302 and the rcvtf instruction 304 according to an embodiment of the present disclosure. The specification of the fcvtr instruction 302 may include floating-point register field 306 to store a reference to a floating-point register (the floating-point register stores a floating point value) and a general-purpose register field to store a reference to general-purpose register (the general-purpose register stores an integer). The instruction fcvtr 302 converts the floating point value to the integer based on the rounding rule specified in the rounding rule field 310. Similarly, the specification of the rcvtf instruction 304 may include general-purpose register field 312 to store a reference to general-purpose register (that stores an integer), and a floating-point register field 314 to store reference to a floating-point register (that stores a floating point value). The instruction rcvtf 304 converts the integer to the floating point value based on the rounding rule specified in the rounding rule field 316.

In the context of instructions that may copy to/from general-purpose registers *(e.g.,fcvtr* or *rcvtf*)*,* the rounding rules may include an additional rounding rule referred to as the *raw* rule. In one embodiment, the *raw* rule may be specified in the rounding rule field 310 of the fcvtr instruction (or field 316 of the rcvtf instruction) with an identifier RAW. Under the raw rule, the bits in the source register (general-purpose or floating-point) are copied directly (e.g., bit-to-bit copy) to the target register (floating-point/general-purpose register) as is, without the conversion. The use of raw rule allows copying of floating point values from a floating-point register to a same (or greater) length general-purpose register and back without disturbing the value.

In the context of instruction that converts a floating-point number to an integer, embodiments of the present disclosure may provide an additional rounding rule relating to the handling of undefined numbers (NaNs). The undefined number may represent an infinity value. This rounding rule may specify the NaNs to integer conversion to be selected to be one of:
- all NaNs are converted to 0,
- +NaN/-NaN are converted to the most positive/most negative integral value representable,
- All NaN are converted to most positive value representable, or
- All NaN are converted to most negative value representable.

In the context of the rcvtf instruction, as shown in **FIG. 3****,** the rcvtf instruction 304 may include a NaN rule field 318 in which the NaN to integer conversion rule (as described above) may be specified.

In one embodiment, the ceiling function as shown in Table 3 may be implemented using the rcvtf instruction by the following code of Table 4.

**Table 4**

| |
|---|
| ```
            CEILING:
                rcvtf_rneg $r0,$f0
                return
``` |

Since the instruction explicitly encodes the rounding rule there is no need to manipulate a floating point control register, thus reducing the overhead associated with switching the rounding modes.

While the disclosure has been described with respect to a limited number of embodiments, those skilled in the art will appreciate numerous modifications and variations there from. It is intended that the appended claims cover all such modifications and variations as fall within the scope of this disclosure.

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase "configured to,' in one embodiment, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 910 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

As explained above, embodiments of the present disclosure are provided by the annexed claims. The embodiments set forth above may be implemented via a processor for executing instructions or code stored on a machine-accessible, machine readable, computer accessible, or computer readable medium. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

## Claims

1. A processor (102) comprising:
a general-purpose register file (106) comprising a first register (108) to store a first data item, a second register (109), and a third register (126); and
an execution unit (104) comprising a logic circuit (114) for executing an instruction (118), wherein the instruction is generated by compiling source code of a software application, the instruction comprising: a first identifier (206), a second identifier (204), and a third identifier (212),
the first identifier (206) representing the first register (108);
the second identifier (204) representing the second register (109); and
the third identifier (212) representing a rounding rule, wherein the execution unit is to execute the instruction to:
generate a second data item based on the first data item;
round the second data item according to the rounding rule specified by the instruction; and
store the rounded second data item in the second storage, **characterized by**:
the third identifier (212) representing the third register (126) that stores an identification value corresponding to the rounding rule.

2. The processor of claim 1, wherein the instruction is specified in an instruction set architecture (ISA) associated with the processor.

3. The processor of any of claim 1 or 2, wherein the first identifier is one of different than or identical to the second identifier.

4. The processor of any of claims 1 to 3, wherein the first data item stored in the first register and the second data item stored in the second register are represented in a floating-point format.

5. The processor of any of claims 1 to 4, wherein the rounding rule is one of round-to-the-nearest rule, round-toward-zero rule, round-toward-positive-infinity, or round-toward-negative-infinity.

6. The processor of any of claims 1 to 5, wherein the instruction comprises one of an addition, a subtraction, a multiplication, or a division operation.

7. The processor of any of claims 1 to 6, wherein a value of the first data item stored in the first register is represented by a plurality of bits comprising a sign bit, a first subset of bits represent an exponent, a second subset of bits represent a fraction.

8. The processor of any of claims 1 to 7, wherein the first register and the second register are floating-point registers that have a same length.

9. The processor of any of claims 1 to 7, wherein the first register and the second register are floating-point registers, and where the first register comprises more bits than the second register.

10. The processor of any of claims 1 to 9, wherein the first register is for storing an integer and the second register is for storing a real value, and wherein the instruction comprises an integer to real conversion operation using the rounding rule specified in the instruction.

11. The processor of any of claims 1 to 10, wherein the rounding rule is at least one of converting an undefined number to zero, converting an undefined number to a largest number representable using a plurality of bits, or converting an undefined number to a smallest number representable using a plurality of bits.

## Patentansprüche

1. Ein Prozessor (102), der Folgendes umfasst:
eine Allzweck-Registerdatei (106), die ein erstes Register (108) umfasst, um ein erstes Datenelement, ein zweites Register (109) und ein drittes Register (126) zu speichern; und
eine Ausführungseinheit (104), die eine Logikschaltung (144) zur Ausführung eines
Befehls (118), wobei der Befehl durch Kompilieren von Quellcode einer Softwareanwendung erzeugt wird
einer Softwareanwendung erzeugt wird, wobei der Befehl umfasst: einen ersten Bezeichner (206), einen
zweiten Bezeichner (204) und einen dritten Bezeichner (212),
die erste Kennzeichnung (206), die das erste Register (108) darstellt;
die zweite Kennzeichnung (204), die das zweite Register (109) darstellt; und
die dritte Kennzeichnung (212) die eine Rundungsregel darstellt, wobei die Ausführungseinheit
die Anweisung ausführen soll, um:
Erzeugen eines zweiten Datenelements auf der Grundlage des ersten Datenelements;
Runden des zweiten Datenelements gemäß der Rundungsregel spezifiziert durch die Anweisung; und
das gerundete zweite Datenelement im zweiten Speicher zu speichern, **gekennzeichnet durch**:
die dritte Kennzeichnung (212), die das dritte Register (126) darstellt, das einen der Rundungsregel entsprechenden Kennzeichnungswert speichert.

2. Prozessor nach Anspruch 1, wobei der Befehl in einer Befehlssatzarchitektur (ISA) spezifiziert ist, die dem Prozessor zugeordnet ist.

3. Der Prozessor nach einem der Ansprüche 1 oder 2, wobei die erste Kennzeichnung eine der folgenden
verschieden von oder identisch mit dem zweiten Bezeichner ist.

4. Der Prozessor nach einem der Ansprüche 1 bis 3, wobei das erste Datenelement, das im ersten Register gespeichert ist
dem ersten Register gespeicherte erste Datenelement und das in dem zweiten Register gespeicherte zweite Datenelement in einem Gleitkommaformat wiedergegeben wird.

5. Der Prozessor nach einem der Ansprüche 1 bis 4, wobei die Rundungsregel eine der folgenden ist
Rundung bis zur nächstgelegenen Regel, Rundung bis zur Null, Rundung bis zur positiven Unendlichkeit,
oder Runden-zur-negativen-Unendlichkeit.

6. Der Prozessor nach einem der Ansprüche 1 bis 5, wobei der Befehl Folgendes umfasst
eine Addition, eine Subtraktion, eine Multiplikation oder eine Division.

7. Der Prozessor nach einem der Ansprüche 1 bis 6, wobei ein Wert des im ersten Register gespeicherten ersten Datenelements
das in dem ersten Register gespeichert ist, durch eine Vielzahl von Bits dargestellt wird, die ein
Vorzeichenbit, eine erste Untergruppe von Bits stellt einen Exponenten dar, eine zweite Untergruppe von Bits
stellt einen Bruch dar.

8. Der Prozessor nach einem der Ansprüche 1 bis 7, wobei das erste Register und das
zweite Register Gleitkommaregister sind, die eine gleiche Länge haben.

9. Der Prozessor nach einem der Ansprüche 1 bis 7, wobei das erste Register und das
zweite Register Gleitkommaregister sind, und wobei das erste Register mehr Bits umfasst als das zweite Register.

10. Der Prozessor nach einem der Ansprüche 1 bis 9, wobei das erste Register zum
Speichern einer ganzen Zahl und das zweite Register zum Speichern eines reellen Wertes dient, und wobei
der Befehl eine Ganzzahl-Real-Umwandlungsoperation unter Verwendung der im Befehl angegebenen
Rundungsregel, die in dem Befehl angegeben ist.

11. Der Prozessor nach einem der Ansprüche 1 bis 10, wobei die Rundungsregel mindestens eine der folgenden
Konvertierung einer undefinierten Zahl in Null, Konvertierung einer undefinierten Zahl in eine größte Zahl, die durch eine Vielzahl von Bits darstellbar ist, oder die Umwandlung
einer undefinierten Zahl in eine kleinste Zahl, die unter Verwendung einer Mehrzahl von Bits darstellbar ist.

## Revendications

1. Un processeur (102) comprenant :
un fichier de registre à usage général (106) comprenant un premier registre (108) pour
stocker un premier élément de données, un deuxième registre (109) et un troisième registre (126) ; et
une unité d'exécution (104) comprenant un circuit logique (144) pour l'exécution d'un
instruction (118), l'instruction étant générée en compilant le code source d'une application logicielle
d'une application logicielle, l'instruction comprenant : un premier identificateur (206), un deuxième identificateur (204) et un troisième identificateur (212),
le premier identificateur (206) représentant le premier registre (108);
le deuxième identificateur (204) représentant le deuxième registre (109); et
le troisième identificateur (212) représentant une règle d'arrondi, dans laquelle Unité d'exécution
doit exécuter l'instruction pour:
créer un deuxième élément de données sur la base du premier élément de données;
arrondir le deuxième élément de données conformément à la règle d'arrondi spécifiée par l'instruction; et
stocker le deuxième élément de données arrondi dans la deuxième mémoire, **caractérisé par**:
le troisième identifiant (212) représentant le troisième registre (126) qui stocke une valeur d'identifiant correspondant à la règle d'arrondi.

2. Processeur selon la revendication 1, dans lequel l'instruction est définie dans une
architecture de jeu d'instructions (ISA) associée au processeur.

3. Le processeur selon l'une des revendications 1 ou 2, dans lequel le premier identifiant est l'un des suivants
est différent du deuxième identificateur ou identique à celui-ci.

4. Le processeur selon l'une des revendications 1 à 3, dans lequel le premier élément de données mémorisé dans le premier registre
le premier élément de données stocké dans le premier registre et le deuxième élément de données stocké dans le deuxième registre sont reproduits dans un format à virgule flottante.

5. Le processeur selon l'une quelconque des revendications 1 à 4, dans lequel la règle d'arrondi est l'une des suivantes
Arrondi à la règle la plus proche, arrondi à zéro, arrondi à l'infini positif,
ou arrondi à l'infini négatif.

6. Le processeur selon l'une quelconque des revendications 1 à 5, dans lequel l'instruction comprend
une addition, une soustraction, une multiplication ou une division.

7. Le processeur selon l'une quelconque des revendications 1 à 6, dans lequel une valeur du premier élément de données stocké dans le premier registre est stocké dans le premier registre est représenté par une pluralité de bits représentant un
bit de signe, un premier sous-ensemble de bits représentant un exposant, un deuxième sous-ensemble de bits
représente une fraction.

8. Le processeur selon l'une des revendications 1 à 7, dans lequel le premier registre et le deuxième registre sont des registres de même valeur.
deuxième registre sont des registres à virgule flottante qui ont la même longueur.

9. Le processeur selon l'une des revendications 1 à 7, dans lequel le premier registre et le deuxième registre sont des registres de même valeur.
deuxième registre sont des registres à virgule flottante, et où le premier registre comprend plus de bits que le deuxième registre.

10. Le processeur selon l'une des revendications 1 à 9, dans lequel le premier registre est destiné à contenir un nombre entier.
registre pour stocker un nombre entier et le deuxième registre pour stocker une valeur réelle, et dans lequel
l'instruction effectue une opération de conversion d'un nombre entier en un nombre réel en utilisant la
règle d'arrondi spécifiée dans l'instruction.

11. Le processeur selon l'une quelconque des revendications 1 à 10, dans lequel la règle d'arrondi est au moins l'une des suivantes
la conversion d'un nombre indéfini en zéro, la conversion d'un nombre indéfini en nombre en un nombre le plus grand qui peut être représenté par une pluralité de bits, ou la conversion
d'un nombre indéfini en un nombre le plus petit qui peut être représenté en utilisant une pluralité de bits.
